# DEMANDE DE BREVET EUROPEEN

(11) **EP 0 589 798 A1**
(43) Date de publication de la demande: **30.03.1994**
(21) Numéro de dépôt: 93402334.2
(22) Date de dépôt: 24.09.1993
(51) Int. Cl.: B60S 1/34

(54) **Bras d'essuie-glace à carter moulé, notamment pour véhicule automobile**

(30) Priorité: 25.09.1992 FR 9211476
(71) Demandeur: VALEO SYSTEMES D'ESSUYAGE, 78180 Montigny-Le-Bretonneux (FR)
(72) Inventeur: Eustache, Jean-Pierre, F-92160 Antony (FR)
(74) Mandataire: Gamonal, Didier

(57) **Abrégé**

Un bras d'essuie-glace comporte habituellement une tête d'entraînement reliée à un porte-balai (8) constitué d'un carter (10) articulé sur cette tête et portant à son autre extrémité une tige (12), ce porte-balai étant soumis à un moyen élastique à ressort (6).

Selon l'invention, le carter (10) est un carter moulé.

## Description

La présente invention se rapporte à un bras d'essuie-glace, notamment pour véhicule automobile.

Habituellement, les bras d'essuie-glace comportent une tête d'entraînement soumise à un mouvement de rotation alternatif autour d'un axe et reliée à un porte-balai constitué d'un carter articulé à pivotement à l'une de ses extrémités autour d'un axe de pivotement porté par la tête et portant à l'autre de ses extrémités une tige de bras, ledit porte-balai étant soumis à un moyen élastique de rappel s'appuyant d'une part sur la tête d'entraînement et d'autre part sur le porte-balai de façon à exercer un effort tendant à faire pivoter le porte-balai dans un sens horaire autour de l'axe de pivotement.

Ces bras d'essuie-glace présentent néanmoins des inconvénients non négligeables.

En effet, le carter est réalisé à partir d'une tôle métallique plane qui est estampée pour obtenir un carter de forme générale en U inversé qui est ensuite matricée pour réaliser des perçages pour la liaison à pivotement entre la tête et celui-ci et qui subit ensuite diverses opérations de pliage pour que l'une de ses extrémités entoure une extrémité de la tige de bras en étant reliée à celle-ci par tout moyen tel que rivetage ou estampage.

Cette réalisation nécessite d'une part une multiplicité d'opérations de matriçage, estampage, pliage qui entraînent une complication de montage et d'autre part limitent les profils et formes du carter obtenu du fait que celui-ci est issu à partir d'une feuille métallique estampée.

De plus, ces bras d'essuie-glace nécessitent qu'un moyen antagoniste s'oppose à l'action du moyen élastique de rappel de façon à limiter le pivotement dans le sens horaire du porte-balai par rapport à la tête en permettant au porte-balai de rester sensiblement dans le prolongement de la tête.

Cette disposition est utile car, lors du montage sur chaîne du bras d'essuie-glace, l'opérateur ne doit pas exercer un effort visant à placer le porte-balai dans le prolongement de la tête d'entraînement.

Généralement, ce moyen antagoniste est réalisé par l'intégration d'une pièce en forme de cale entre la tête et le carter du porte-balai qui interdit le pivotement de celui-ci.

Cette pièce peut être soit cassée, soit perdue lors de manipulations pendant le transport ou le montage et sa fonction ainsi annulée.

La présente invention se propose de rémédier aux inconvénients mentionnés ci-dessus en disposant d'un carter qui supprime la plus grande partie des opérations de matriçage et autres tout en offrant toutes les possibilités de formes et de profils possibles pour le carter.

De plus, la présente invention offre la possibilité de prévoir un moyen antagoniste intégré directement au carter.

Selon l'invention, un bras d'essuie-glace, notamment pour véhicule automobile, comportant une tête d'entraînement soumise à un mouvement de rotation autour d'un axe et reliée par un axe de pivotement à un porte-balai constitué d'un carter articulé à pivotement à l'une de ses extrémités autour dudit axe et portant à l'autre de ses extrémités une tige de bras, ledit porte-balai étant soumis à un moyen élastique s'appuyant d'une part sur la tête d'entraînement et d'autre part sur le porte-balai est caractérisé en ce que le carter est au moins en partie un carter moulé.

Grâce à l'opération de moulage, le carter peut présenter toute forme et tout profil voulus pour réaliser un bras.

Selon une autre caractéristique, des butées en pivotement du porte-balai sont portées par le carter.

Ainsi, on supprime une pièce supplémentaire qui est rapportée, ce qui ne peut que faciliter grandement le montage.

Selon une autre caractéristique les butées coopèrent avec la tête d'entraînement.

Selon une autre caractéristique une butée coopère avec un appui prévu entre l'axe d'articulation et l'axe de rotation.

Selon une autre caractéristique une butée coopère avec un appui prévu entre l'axe d'articulation et la tige du porte-balai.

Selon une autre caractéristique, les butées sont monoblocs avec le carter.

Selon une autre caractéristique des moyens de liaison entre le carter et la tige sont prévus de manière monobloc avec le carter.

Selon une autre caractéristique les moyens de liaison consistent en des pions cylindriques.

Les autres caractéristiques et avantages de l'invention vont ressortir maintenant de la description qui va suivre en se référant aux dessins annexés donnés à titre d'exemple sur lesquels :
- la figure 1 est une vue schématique en coupe longitudinale du bras d'essuie-glace selon l'invention ;
- la figure 2 est une vue en coupe d'un élément du bras d'essuie-glace de la figure 1 ;
- la figure 3 est une vue de dessus de l'élément de la figure 2 ;
- la figure 4 est une vue latérale d'un autre élément du bras d'essuie-glace selon la figure 1.
- la figure 5 est une vue de dessous de l'élément de la figure 4 ;
- la figure 6 est une vue en coupe longitudinale selon la ligne AA de la figure 5 ;
- la figure 7 est une vue en coupe selon la ligne BB de la figure 1 ;
- la figure 8 est une vue en coupe partielle d'une variante du détail montré en C sur la figure 1 ;
- les figures 9 et 10 montrent le bras d'essuie-glace selon l'invention en diverses positions.

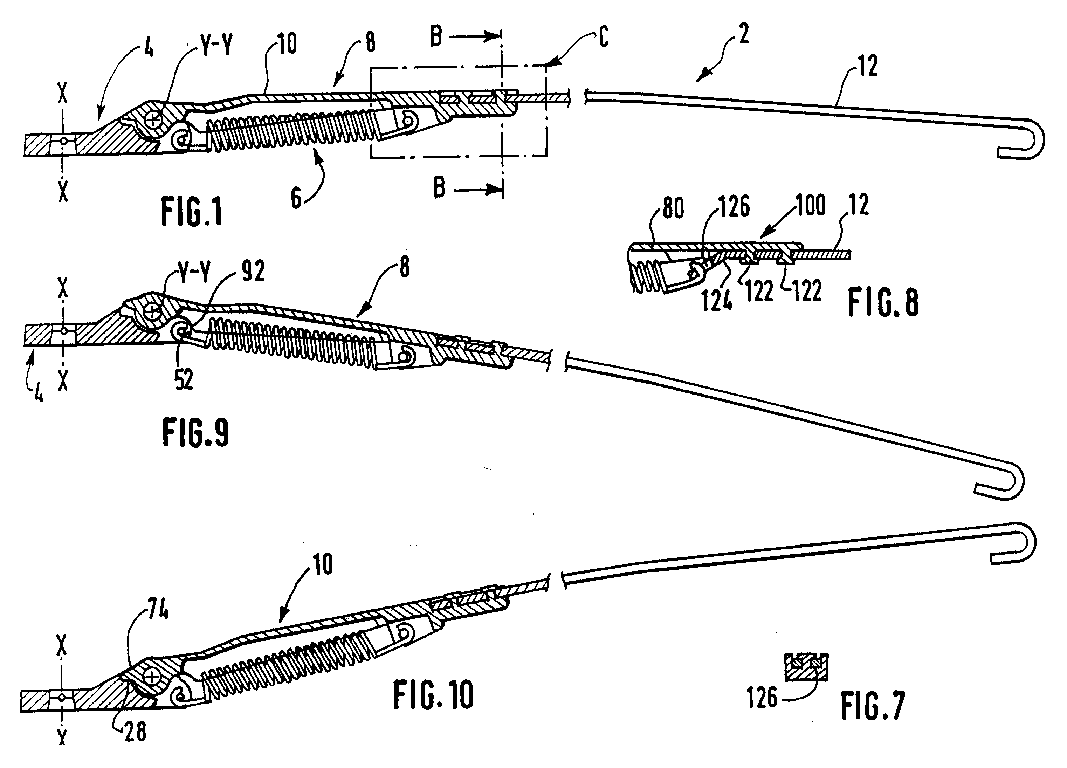

On se réfère maintenant à la figure 1 qui montre un bras d'essuie-glace 2 comportant une tête d'entraînement 4, un moyen élastique à ressort 6 et un porte-balai 8 constitué d'un carter 10 et d'une tige de bras 12.

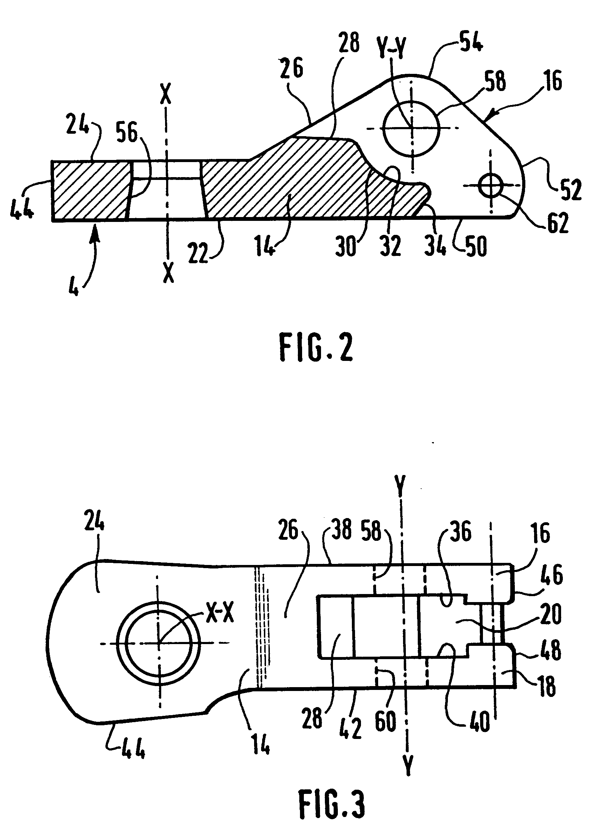

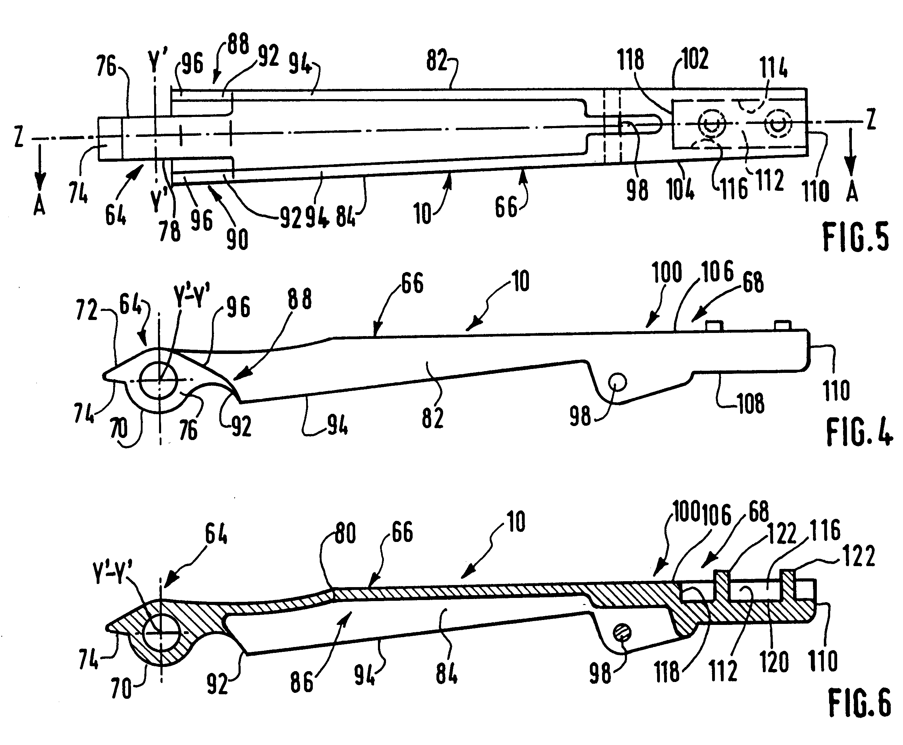

En se référant en plus aux figures 2 et 3, la tête d'entraînement 4 comporte un noyau 14 se prolongeant par deux flasques 16, 18 sensiblement parallèles entre eux et à distance l'un de l'autre de manière à créer un évidement 20.

Le noyau 14 présente une base 22 sensiblement horizontale, une surface supérieure 24 sensiblement parallèle et à distance de ladite base. Cette surface supérieure se poursuit par une surface inclinée 26 qui va en s'écartant de la base pour aboutir d'une part aux flasques 16, 18 et d'autre part à une surface d'appui de butée 28 située dans l'évidement 20 entre les deux flasques 16, 18, cette surface d'appui étant sensiblement parallèle à la base 22. La surface de butée 28 vient rejoindre la base 22 par une surface de liaison 30 qui comporte une surface courbe 32 issue de la surface d'appui de butée 28 et se poursuivant par une surface plane inclinée 34 aboutissant à la base, cette surface de liaison étant située également dans l'évidement 20.

C'est du côté de cette surface de liaison que s'érigent les deux flasques plans 16, 18 de manière à ce que chaque flasque présente deux flancs, les flancs 36, 38 pour le flasque 16 et les flancs 40, 42 pour le flasque 18, sensiblement parallèles entre eux tout en étant perpendiculaires à la base 22.

Les flancs intérieurs 36, 40 des flasques 16, 18 viennent rejoindre la surface d'appui de butée 28 et la surface de liaison 30 alors que les flancs extérieurs 38, 42 sont confondus avec une paroi latérale 44 qui, du noyau 14, vient délimiter de manière périphérique ledit noyau, comme visible sur les figures 2 et 3.

Les flasques 16, 18 aboutissent du côté opposé à la jonction avec les surfaces d'appui de butée et de liaison à un rebord 46 pour le flasque 16 et 48 pour le flasque 18.

Les rebords 46, 48 présentent chacun une forme identique et comportent une partie de rebord rectiligne 50 dans le prolongement de la base 22 qui se poursuit à distance de la surface de liaison 30 par une partie de rebord de direction courbe 52, dit rebord de butée, dont la fonction sera décrite dans la suite de la description, cette partie de rebord courbe ayant une concavité dirigée vers la surface de liaison et se continuant par une ultime partie de rebord courbe 54 venant rejoindre la surface inclinée 26.

La tête d'entraînement ainsi constituée comporte en outre un alésage 56, formant axe d'entraînement, de direction XX sensiblement verticale traversant la surface supérieure 24 et la base 22 en étant sensiblement perpendiculaire à ladite base et apte à recevoir un arbre d'entraînement soumis à un mouvement de rotation alternatif par l'intermédiaire d'un mécanisme d'entraînement (non représenté) ; deux alésages 58, 60, de direction confondue YY, disposés sensiblement orthogonalement à l'axe XX en étant prévus pour l'alésage 58 dans le flasque 16 et pour l'alésage 60 dans le flasque 18, ces deux alésages étant coaxiaux en étant disposés à distance de la surface de liaison 30, de la partie de rebord courbe 54 et de la base 22 en servant d'axe de pivotement pour le carter 10.

De plus, la tête 4 porte un axe d'accrochage 62 du moyen élastique à ressort 6, cet axe d'accrochage étant soit une tige réalisée directement lors de l'élaboration de la tête d'entraînement par moulage soit une tige sur laquelle est surmoulée ladite tête en étant disposé sensiblement parallèlement à l'axe YY et à proximité du rebord 52.

On se réfère maintenant aux figures 4 à 6 qui montrent le carter 10 du porte-balai 8, ce carter étant obtenu par moulage de matière renforcée, telle que celle connue sous la dénomination Zamac et présentant une étendue selon un axe longitudinal ZZ (figure 5).

Ce carter présente une tête de pivotement 64 se prolongeant par un corps de carter 66 qui aboutit à une terminaison 68.

La tête de pivotement comporte une partie tubulaire 70 de direction Y'Y' sensiblement perpendiculaire à l'axe ZZ et dont le diamètre D1 de l'alésage interne correspond sensiblement au diamiètre des alésages 58, 60.

La partie tubulaire 70 porte une protubérance 72 saillante radialement à l'opposé du corps 66 en étant munie d'une surface plane sensiblement horizontale 74, dite dans la suite de la description butée avant, qui s'établit en partie inférieure de cette protubérance.

L'étendue de la partie tubulaire 70 est limitée par deux surfaces terminales 76, 78 dont l'écartement correspond sensiblement à l'écartement de l'évidement 20, c'est-à-dire à la distance entre les flancs 36, 40.

Cette tête de pivotement est raccordée par une partie de liaison, de même épaisseur que la partie tubulaire, au corps 66 du carter 10.

Ce corps présente une section en forme de U inversé avec un dos 80 sensiblement parallèle à l'axe Y'Y' et venant aboutir sur la périphérie supérieure de la partie tubulaire 70. Ce dos se prolonge par des bords latéraux 82, 84 sensiblement perpendiculaires au dos et créant un logement 86 délimité par lesdits bords, la partie de liaison de la partie tubulaire de la tête de pivotement et la terminaison 68.

Les parties latérale 88, 90 des bords 82, 84 présentent au voisinage de la tête de pivotement 64 un profil spécifique qui se compose d'une partie courbe 92, dite butée arrière, dont la courbure correspond sensiblement en partie à la courbure du rebord 52 de la tête d'entraînement 4 et qui est issue des extrémités libres 94 des bords 82, 84 et qui se prolonge par une partie sensiblement rectiligne 96.

Un deuxième axe d'accrochage 98 du moyen élastique à ressort est prévu entre les bords 82, 84 et cela au niveau de la terminaison 68 en étant sensiblement parallèle à l'axe Y'Y'.

La terminaison 68 se compose d'une semelle 100 prévue dans la continuité et le prolongement du dos 80 en étant de plus grande épaisseur que ce dos.

Cette semelle est délimitée par deux faces longitudinales verticales 102, 104 dans le prolongement des bords 82, 84, deux faces longitudinales sensiblement horizontales 106, 108, la face 106 étant dans le prolongement de la face supérieure du dos 80 et la face 108 étant située en retrait par rapport à la face 106 et ladite semelle étant délimitée en extrémité par une face terminale transversale 110.

La semelle 100 comporte un évidement 112 parallélépipédique ouvert en direction des faces 106 et 110, cet évidement étant formé par deux parois verticales longitudinales 114, 116 en retrait par rapport aux faces 102, 104, par une paroi verticale transversale 118 au voisinage du corps 66 et par un fond 120 situé entre les faces 106 et 108.

A partir du fond 120 s'érige au moins un pion 122, ici deux pions situés à distance l'un de l'autre. Ces pions sont de forme cylindrique dont l'axe s'érige sensiblement perpendiculairement à la paroi de fond 120 en étant disposés à égale distance entre les parois 114, 116 et de sorte que l'extrémité libre des pions cylindrique dépasse la surface de la face horizontale 106 de la semelle 100.

L'ensemble du carter 10, c'est-à-dire la tête de pivotement 64, le corps de carter 66 et la terminaison 68, est réalisé d'une seule pièce lors de l'opération de moulage.

Pour réaliser un bras d'essuie-glace selon l'invention, il suffit de placer une extrémité d'une tige de bras 12 munie de perçages 126 prévus en correspondance des pions 122 dans l'évidement 112 pour obtenir, après matage des extrémités libres des pions dépassant de la tige comme cela est présenté sur la figure 7, une liaison indémontable entre ladite tige et ledit carter en formant ainsi le porte-balai.

Après cette opération, il suffit de glisser la tête de pivotement 64 dans l'évidement 20 de la tête d'entraînement 4 de manière à ce que la partie évidée de la partie tubulaire 70 soit en correspondance avec les alésages 58, 60 prévus dans les flasques 16, 18 puis de glisser un arbre dans cette suite d'alésages pour obtenir une liaison à pivotement entre la tête et le porte-balai. Dans cette position, la butée avant 74 se trouve en regard de la surface d'appui de butée 28 et la butée arrière 92 se trouve en regard du rebord de butée 52.

Dans cette position, un premier moyen de butée, constitué par la butée 74 de la tête de pivotement 64 et la surface d'apppui 28 de la tête d'entraînement 4, se trouve situé entre l'axe XX de la tête 4 et l'axe de pivotement YY alors qu'un deuxième moyen de butée, constitué par la butée 92 du corps 66 et le rebord 52 de la tête d'entraînemnet se trouve situé entre l'axe de pivotement YY et la terminaison 68.

Dans une ultime étape, un moyen élastique à ressort 6, tel qu'un ressort à compression est placé dans le logement 86 du carter 10 pour être ensuite accroché par des extrémités aux axes 62, 98.

Comme représenté à la figure 9, sous l'action de ce ressort, le porte-balai va pivoter autour de l'axe YY dans le sens horaire et venir par ses butées arrière 92 au contact des rebords de butée 52 de la tête d'entraînement 4 ce qui va interdire la poursuite du pivotement.

De plus, comme visible sur la figure 10, le pivotement dans le sens anti-horaire du porte-balai est limité par le contact de la butée avant 74 du carter 10 avec la surface d'appui de butée 28 de la tête d'entraînement 4.

On se réfère maintenant à la figure 8 qui montre une variante de la semelle 100.

Dans cette variante, la semelle ne comporte pas d'évidement et les pions 122 sont issus directement de celle-ci en faisant saillie à l'opposé du dos 80.

En plus, comme visible sur cette figure, il est possible de supprimer l'axe d'accrochage 98 prévu sur le carter 10 en prévoyant une partie rabattue 124 de la tige 12 munie d'un orifice d'accrochage 126 pour le ressort 6, comme cela est connu en soi.

La présente invention n'est pas limitée aux exemples de réalisation décrits mais englobe toutes variantes.

Notamment, il a été décrit jusqu'à maintenant que la tête de pivotement 64 était moulée conjointement avec le corps 66 et la terminaison 68.

Il peut être envisagé, et cela sans sortir du cadre de l'invention, que la tête de pivotement 64 et/ou la terminaison 68 soient des pièces distinctes sur lesquelles est surmoulé le corps 66 du carter ce qui permet également d'obtenir toute forme et section voulues.

## Revendications

**1)** Bras d'essuie-glace, notamment pour véhicule automobile, comportant une tête d'entraînement (4) soumise à un mouvement de rotation autour d'un axe (XX) et reliée par un axe de pivotement (YY) à un porte-balai (8) constitué d'un carter (10) articulé à l'une de ses extrémités autour dudit axe et portant à l'autre de ses extrémités une tige de bras (12), ledit porte-balai étant soumis à un moyen élastique de rappel (6) s'appuyant d'une part sur la tête d'entraînement (4) et d'autre part sur le porte balai (6), caractérisé en ce que le carter (10) est au moins en partie un carter moulé.

**2)** Bras d'essuie-glace selon la revendication 1, caractérisé en ce que des butées en pivotement (74,92) du porte-balai (8) sont portées par le carter (10).

**3)** Bras d'essuie-glace selon la revendication 2, caractérisé en ce que les butées (74,92) coopèrent avec la tête d'entraînement (4).

**4)** Bras d'essuie-glace selon l'une des revendications précédentes, caractérisé en ce qu'une butée (74) coopère avec un appui (28) prévu entre l'axe d'articulation (YY) et l'axe de rotation (XX) de la tête (4).

**5)** Bras d'essuie-glace selon l'une des revendications précédentes, caractérisé en ce qu'une butée (92) coopère avec un appui (52) de la tête (4) prévu entre l'axe d'articulation (XX) et la tige (12) du porte-balai.

**6)** Bras d'essuie-glace selon l'une des revendications précédentes, caractérisé en ce que les butées (74,92) sont monoblocs avec le carter (10).

**7)** Bras d'essuie-glace selon l'une des revendications précédentes, caractérisé en ce que des moyens de liaison entre le carter (10) et la tige (12) sont prévus de manière monobloc avec le carter (10).

**8)** Bras d'essuie-glace selon la revendication 6, caractérisé en ce que les moyens de liaison consistent en des parties cylindriques.
